# EUROPEAN PATENT APPLICATION

(11) **EP 4 201 629 A1**
(43) Date of publication of application: **28.06.2023**
(21) Application number: 21216890.0
(22) Date of filing: 22.12.2021
(51) Int. Cl.: B29B 11/16

(54) **METHOD FOR MANUFACTURING A PREFORM ELEMENT, METHOD FOR MANUFACTURING A WIND TURBINE ROTOR BLADE, AND MOLD ARRANGEMENT**

(71) Applicant: Siemens Gamesa Renewable Energy A/S, 7330 Brande (DK)
(72) Inventor: van Oosterom, Samuel Robert, 9220 Aalborg (DK)
(74) Representative: SGRE-Association

(57) **Abstract**

Method for manufacturing a preform element (26) used in particular for manufacturing a rotor blade of a wind turbine, wherein the preform element (26) comprises one or more components (7) provided with at least one adhesive agent, wherein the components (7) are arranged on a molding surface (3) of a mold (2), wherein at least one bladder (4, 5) is arranged on top of the components (7) and/or underneath the mold (2) and wherein at least one fluid is supplied to the bladder (4, 5) for heating or cooling of the adhesive agent.

## Description

The invention refers to a method for manufacturing a preform element used in particular for manufacturing a rotor blade of a wind turbine. Furthermore, the invention relates to a method for manufacturing a rotor blade and a mold arrangement for manufacturing the preform element.

Preform elements, or preforms, respectively, are components that are used in composite manufacturing processes to decrease the manufacturing cycle times. In particular, such preform elements can be used in the production of rotor blades for wind turbines.

A preform element may comprise one or more components, in particular one or more textile-layers, which are locally attached to each other by using an adhesive agent. In addition, the preform elements can also comprise solid core elements, which are adhered to one or more textile layers using the adhesive agent. This allows for simultaneously arranging the components of the preform element in a mold for manufacturing a rotor blade of the wind turbine. Since a plurality of components used for the manufacture of the rotor blade can be handled simultaneously by using the preform element, a significant reduction of the cycle time can be obtained.

The preform elements can be used for forming different sections of the rotor blade, wherein different thicknesses, different sizes and/or different compositions of the preform element can be used to account for the different structural requirements at the respective position of the rotor blade formed by the preform element.

The different components of the preform element are partially adhered to each other to form a semi-solid element. In particular textile components of the preform element like fiber mats consisting of glass fibers, carbon fibers, or aramid fibers remain unaffected by the adhesive agent, so that these layers can be filled later on with a resin during the manufacturing of the rotor blade. To cause sufficient adherence of the adhesive agent, heating and/or cooling of the adhesive agent may be required for activation and/or for establishing a connection between different components of the preform element, for instance by liquefying and subsequent solidifying of the adhesive agent.

Such a heating and cooling process requires careful design as there are limited time and temperature process windows in which sufficient bonding between the components of the preform element can be achieved. If the adhesive agent is not heated to a high enough temperature or heated for too short of a time period, then it will not sufficiently impregnate the textile surfaces of the components forming the preform element. If the adhesive agent is heated to a temperature that is too high, or heated for a too long time period, then it will be drawn into the textile layers by capillary action and away from the surfaces at which the bonding shall occur, resulting in poor interlaminar bonding and therefore in a reduced stability of the preform element.

Therefore, it is an object of the invention to provide an improved method for heating and/or cooling the adhesive agent during the manufacture of a preform element.

According to the invention, this object is solved by a method as initially described, wherein the components are arranged on a molding surface of a mold, wherein at least one bladder is arranged on top of the components and/or underneath the mold and wherein at least one fluid is supplied to the bladder for heating or cooling of the adhesive agent.

The heating and/or cooling of the adhesive agent occurs by providing a fluid to the bladder which has a temperature that is higher, or lower, respectively, than the temperature of the adhesive agent and/or of the components forming the preform element, respectively. The different components of the preform element, for instance textile components and rigid core materials, may have a poor thermal conductivity, so that outer layers of a stack of components forming the preform element can reach higher temperature far earlier than components arranged at the center of the stack. Advantageously, by providing the bladder and the fluid in the bladder for supplying heat to the preform element, a tight control of the temperature and the energy that applied to the preform element during heating can be obtained. Correspondingly, the providing of a fluid for cooling the adhesive agent in the preform element also allows for a tight control of a cooling process of the adhesive agent.

By using a fluid, for instance a liquid like water, significantly higher specific heat capacity, thermal conductivity and/or density compared to other types of heating means may be obtained. This may result in particular in a much higher rate of energy transfer from the one or more bladders to the preform element to be manufactured, or in case of cooling in a much higher rate of energy transfer from the preform elements to be manufactured into the bladder.

Advantageously, a high heat transfer rate reduces the heating time required and minimizes the migration of the adhesive agent during its thermal activation. The reduced migration of the adhesive agent will result in improved structural properties of the preform element to be manufactured. In addition, also the total cycle time is minimized resulting advantageously in a higher production rate.

Furthermore, also the application of a fluid for cooling the adhesive agent results in a reduced binder migration and a reduced total cycled time, so that in particular the combination of heating and cooling can significantly reduce the required time and therefore also the costs of the preform element manufacturing.

An additional advantage of using the bladder for heating and/or cooling of the adhesive agent is the reduced requirement for floor space, since the heating can occur directly in the mold, in which the components for forming the preform element are arranged. This allows advantageously to omit the usage of heating devices like ovens arranged in the vicinity of the mold. Advantageously, the ability of heating the adhesive agent already in the mold allows for omitting a transportation of the preform element between the mold and heating devices like an oven.

A further advantage of the heating and/or cooling using the bladder is the flexibility of the bladder which allows for using it on differently shaped preform elements, or on differently shaped stacks of components, respectively. Advantageously, a high flexibility in the usage of the bladder is achieved. In addition, a bladder can be fabricated comparatively simple and at low cost, even for large geometries of preform elements to be produced.

By providing a fluid, in particular a liquid, to the bladder, a high heat transfer rate between the bladder and the adhesive agent, or the stack of components forming the preform element, respectively, can be obtained. Furthermore, in particular by using a liquid, a high specific heat capacity of the bladder used for heating can be provided so that a precise temperature control of the preform element to be manufactured is possible. Advantageously, by arranging a fillable or filled bladder on the preform element, the usage of a closable or rigid mold, respectively, is not required.

It is possible that the bladder is arranged on top of the stack of components arranged on the mold so that the preform element to be manufactured can be heated from the top side.

In this case, a heatable molding surface can be used. In addition or alternatively, it is also possible that the bladder is arranged underneath the mold, so that a bottom side of the mold can be heated by the bladder so that advantageously no separately heatable mold or molding surface is required. In this case, also an additional bladder may be arranged on top of the components to allow for a heat input from two surfaces. However, it is also possible to combine the bladder arranged underneath the mold with another heating means arranged on top of the components, for instance a heating blanket or the like.

In addition, the bladder itself has only a low heat capacity, so that a heating function and a cooling function of the bladder can easily be changed by providing a fluid at different temperatures, or by exchanging the fluid in the bladder by the same type of fluid or another type of fluid with a different temperature. So a change between heating and cooling procedures can be obtained quickly by exchanging the fluid inside the bladder by a fluid with another temperature. This significantly allows for a reduction of long cycle times in the manufacturing process, since no significant changes are required for the manufacturing setup.

The bladder may be for instance flexible and/or partly expendable by the fluid supplied to it, or by a fluid supply means supplying the fluid, respectively. The bladder may be fabricated for instance from a flexible polymer material, a rubber or the like. The material can be chosen in particular in dependence on the fluid, which is filled to the bladder, so that the bladder is both tight and resistant against the used fluid for heating and/or cooling of the adhesive agent.

A flexible, fluid-filled bladder conforms to the upper surface of the part and the lower surface of the mold, due to hydrostatic pressure in case of a liquid, effectively eliminating air gaps in between the components forming the preform part and/or in between the bladder and a top side of the component, or between the components and the molding surface, respectively. Advantageously, removing the air gaps increases the heat application to the preform element, since the presence of air gaps would reduce the heat transfer rate due to the low thermal conductivity and specific heat capacity of air.

Due to the simple construction of the bladder, the cost for the heating setup can be minimized. This results also in a reduced cost of the manufacture of the preform element. The bladders can be cheaply manufactured and heating units and/or cooling units can be used for supplying a fluid to multiple bladders so that the entire manufacturing system can be scaled up with minimal additional costs.

The usage of the bladder arranged on top of the components has the advantage that the adherence between the components, or the different layers used for building the preform element, can be maximized by preventing migration of the adhesive agent away from the surface of textile components, or textile layers, respectively, due to an overheating of thin regions of the component.

The usage of a low viscosity fluid as the heating medium ensures a comparatively uniform temperature application across the preform element, or across the section of the preform element arranged underneath the bladder, respectively. The fluid inside the bladder exhibits a comparatively constant temperature all over the bladder due to forced and/or natural convection of the fluid inside the bladder. Therefore, by supplying fluid of a different temperature to the bladder, quickly a different temperature all over the bladder is obtainable.

Similar to a heating blanket, a heating bladder has a high degree of process flexibility. The heating bladder can be easily repositioned, used on a multitude of different preform element geometries. Furthermore, in case that more bladders are used, an easy scaling of the heating arrangement for the preform elements of different sizes is possible.

Preferably, first a heated fluid is filled into the bladder, wherein after a heating period, the heated fluid is changed by a fluid with a temperature lower than the temperature of the heated fluid, or the heated fluid is removed from the bladder and/or the bladder is removed from the components. The adhesive agent may be for instance a binder or a tackifier which can be at least partly molten and/or liquified by applying heat so that it can flow around the surfaces of the components to be adhered for forming the preform element. To allow for attachment of neighboring components, the adhesive agent can then be solidified again by cooling it.

The usage of the adhesive agent for adhering the components has the advantage that it has a good scalability and only requires a short time for being applied between the components, in particular compared to other attachment methods like stitching, tufting, braiding, weaving, or ultrasonic welding. The adhesive agent may be solid or liquid. In particular, the adhesive agent may be a powder thermoset or thermoplastic material, which may be evenly deposited upon the surfaces of the reinforcement textile components in a granular form. However, also other types of adhesive agents, for instance the usage of liquid adhesive agents or the like, is possible.

For activating the adhesive agent, a heating occurs by filling a heated fluid in the bladder. After a heating period, the heated fluid can be exchanged by a fluid with a lower temperature than the heated fluid so that a cooling of the adhesive agent may occur for the duration of a cooling period. Alternatively, a cooling can also be achieved by removing the heated fluid from the bladder and/or by removing the bladder from the top of the components so that the adhesive agent, or the stack of components, respectively, can cool via natural convection with the environment of the mold.

In case of an active cooling, in which a fluid with a temperature lower than the temperature of the heated fluid is supplied, a fluid at ambient temperature can be supplied to avoid for the use of an active cooling means. In the alternative, an active cooling means may be used, so that a chilled fluid, hence a fluid with a temperature below the temperature of the surrounding of the mold, can be supplied to the bladder for shortening the cooling time of the components. The fluid with the temperature lower than the temperature of the heated fluid can be supplied for the duration of a cooling period, correspondingly, to allow for the desired solidifying of the adhesive agent for adhering the components forming the preform element.

In a preferred embodiment, the bladder comprises at least two connections, wherein the fluid is continuously added and discharged from the bladder through the connections during heating or cooling of the adhesive agent. One or more of the connections can hence be used as inlets, to which the fluid is supplied from an external fluid supplying means, wherein one or more of the connections are used as outlets for removing the fluid from the interior of the bladder. Continuously providing the fluid to the bladder allows for maintaining a constant and precisely controllable temperature of the bladder and therefore a precise and controllable heat input into the adhesive agent of the preform element to be manufactured.

Preferably, at least one bladder arranged underneath the mold is used, wherein the bladder is expanded by the supplied fluid in such manner that it is at least sectionally in direct contact with a backside of the mold opposite to the molding surface.

The usage of a bladder arranged on top of the components has the advantage that due to the weight of the fluid, in particular when a liquid is used, and/or due to an expansion of the bladder, which may occur by any fluid used, a tight contact between the outer surface of the bladder and the top surface of the components can be obtained. This allows for reducing or removing air gaps between the bladder and the stack of components. Therefore, the heat transfer between the components, and therefore also of the adhesive agent, and the bladder can be improved.

By expanding the bladder arranged underneath the molding surface, a direct contact with a backside of the mold opposite to the molding surface can be created without effort. In particular, the entire portion of the backside of the mold, which corresponds to the portion of the molding surface in which the components are provided, is in direct contact with the bladder. Advantageously, a stable and controllable heat transfer through the mold, which is in particular a thin plate or a tray-like mold, is established.

Preferably, a liquid is supplied to the bladder, in particular water or a liquid hydrocarbon. As liquid hydrocarbon, for instance glycol, glycerol, an oil or the like may be used. The usage of a liquid other than water may have the advantage that heating to temperatures above 100°C, or cooling to temperatures below 0°C, is possible, when a fluid is used, which remains liquid at these temperatures. The usage of water has the advantage that it is comparatively cheap and needs no special recycling or disposal. In particular, water removed from the bladder may be discharged after passing through the bladder without the need for storing or specialized disposal.

In a preferred embodiment, the temperature of a fluid supplied to the bladder is set by a tempering means in dependence of a measured temperature of the components, the adhesive agent, the bladder and/or the mold measured by at least one temperature sensor. In particular, a precise temperature control can be obtained by using a tempering means for tempering the fluid, hence for cooling and/or heating the fluid, in dependence of at least one measured temperature. One or more temperature sensors can be arranged in the interior or on the exterior of the bladder to measure and/or monitor the temperature during a heating cycle. Also, an arrangement of one or more temperature sensors at the components, or within the components, is possible. Likewise, also one or more temperature sensors arranged at the mold may be used. As temperature sensor, for instance a thermocouple may be used.

Preferably, the amount of the fluid supplied to the bladder by a fluid supplying means and/or the amount of the fluid kept in the bladder during the heating and/or cooling of the adhesive agent is set in dependence of a measured pressure at or in the components measured by at least one pressure sensor. The usage of a pressure sensor like a pressure transducer for measuring the pressure inside the components allows for applying a constant and controllable pressure onto the components, in particular by filling the bladder arranged on top of the component with a controlled amount of fluid. The pressure can be increased by adding more fluid, in particular a liquid, to the bladder. Correspondingly, the pressure can be reduced by removing the fluid from the bladder.

In a preferred embodiment, a plurality of bladders is arranged on top of the components and/or underneath the mold, wherein at least two of the bladders are filled with a fluid at a different temperature. The usage of multiple bladders arranged on top of the components and/or underneath the mold allows for heating different sections of the components, or different sections of the adhesive agent arranged between the components, with different temperatures. This may for instance account for different thicknesses of the preform element to be manufactured, so that the heat input into the different sections can be controlled by the temperature of the fluid supplied to the different bladders. Advantageously, the cycle times in manufacturing of the preform element can be minimized by allowing for higher peak heat energy inputs in thick regions of the preform.

The usage of multiple bladders above and/or below the preform element to be manufactured can be used on preform elements which require significantly different levels of energy inputs across their geometries with minimal additional complexity. The individual bladders can be filled with fluids at different temperatures and/or filled and emptied at different process times, depending on localized process requirements. For example, multiple bladders may be provided as separate bladders or as inner cavities of a multiple bladder element, which comprises a plurality of separated inner cavities each forming a bladder separately fillable with a fluid.

Preferably, a bladder comprising at least one heat insulating surface is used, wherein the bladder is arranged in such manner that the heat insulating surface is arranged opposite to the components and the mold. Hence, the insulating surface may be arranged on the side of the bladder that is arranged opposite to the top of the component stack, or which is arranged opposed to the bottom side of the mold in case of a bladder arranged underneath the mold. The usage of an insulation surface has the advantage that heat losses to the environment can be reduced so that less energy is required for heating the fluid, and/or for maintaining a constant temperature of the fluid in the bladder, respectively.

Preferably, the components are arranged on the molding surface within a vacuum bag. Temperature sensors and/or pressure sensors used for measuring the temperature and/or the pressures at or in the vicinity of the components can also be arranged in the vacuum bag or outside of the vacuum bag, respectively. The vacuum bag allows for providing a pressure on the components for maintaining their arrangement, or their relative position towards each other, respectively, during the manufacturing process.

A method according to the invention for manufacturing a rotor blade uses at least one preform element manufactured according to the invention.

For manufacturing the rotor blade, one or more preform elements manufactured by a method according to the invention can be used.

The rotor blade can be manufactured in particular in a liquid composite molding process, for instance in a resin transfer molding (RTM) process and/or in a vacuum assisted resin infusion process. The preform element used for manufacturing the rotor blade comprises in particular one or more layers of a textile material like a glass fiber-based material, a carbon fiber-based material, an aramid fiber-based material or the like. These textile materials are infused with a resin for manufacturing the rotor blade. The usage of one or more preform elements significantly reduces the effort for arrangement of the components used for casting the rotor blade.

All details and advantages described in relation to the method for manufacturing a preform element according to the invention apply correspondingly to the method for manufacturing a rotor blade according to the invention and vice versa.

A mold arrangement for manufacturing a preform element according to the invention comprises a mold with a molding surface, at least one bladder and a fluid supply means connected or connectable to the bladder for supplying a fluid to the bladder. The bladder may be arranged or arrangeable underneath the mold and/or on top of components arranged on the molding surface.

Preferably, the mold comprises a support structure and a plate-like carrier, wherein the plate-like carrier is supported on the support structure and provides the molding surface, wherein at least one bladder is arranged inside the support structure in a cavity underneath the carrier. By providing a plate-like carrier, in particular with a small thickness, a high heat transfer from the bladder arranged underneath the carrier to the molding surface provided by the top side of the carrier becomes possible.

The support structure may be for instance a frame structure on which the carrier can be arranged above the bladder. It is possible that the frame structure comprises one or more covering sections, for instance covering sections comprising a thermally insulating material, surrounding the bladder at least sectionally in order to reduce the heat loss from the bladder through the support structure during the manufacture of a preform element.

The fluid supply means may be connected or connectable to the bladder, for instance by a plurality of connection means like hoses, tubes or the like. The bladder may comprise one or more inlets and/or one or more outlets to allow for supplying and/or discharge of the fluid as well as for continuous circulation of the fluid in the interior of the bladder.

In a preferred embodiment, the fluid supply means and/or the bladder are connected to at least one fluid tempering means adapted for heating and/or cooling of the fluid. In case that more than one bladder is used and/or in case that a multiple bladder element is used, more than one fluid supply means and/or more than one fluid tempering means can be used to allow for supplying fluid with different temperatures to the different bladders.

In a preferred embodiment, the mold arrangement comprises one or more temperature sensors, wherein the fluid tempering means is adapted to heat and/or cool the fluid in dependence of at least one temperature measured by the temperature sensors, and/or the mold arrangement comprises one or more pressure sensors, wherein the fluid supply means is adapted to supply an amount of the fluid to the bladder and/or to keep a certain amount of fluid in the bladder during the heating and or cooling of the adhesive agent in dependence of a pressure measured by at least one of the pressure sensors arranged on the components.

All details and advantages discussed in relation with the methods for manufacturing a preform element or a rotor blade according to the invention apply correspondingly to the mold arrangement for manufacturing a preform element according to the invention and vice versa.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: an embodiment of a mold arrangement according to the invention,
- Fig. 2: an embodiment of a bladder of the mold arrangement according to the invention, and
- Fig. 3 - 6: illustrations of the mold arrangement according to the invention used in an embodiment of a method according to the invention for manufacturing a preform element.

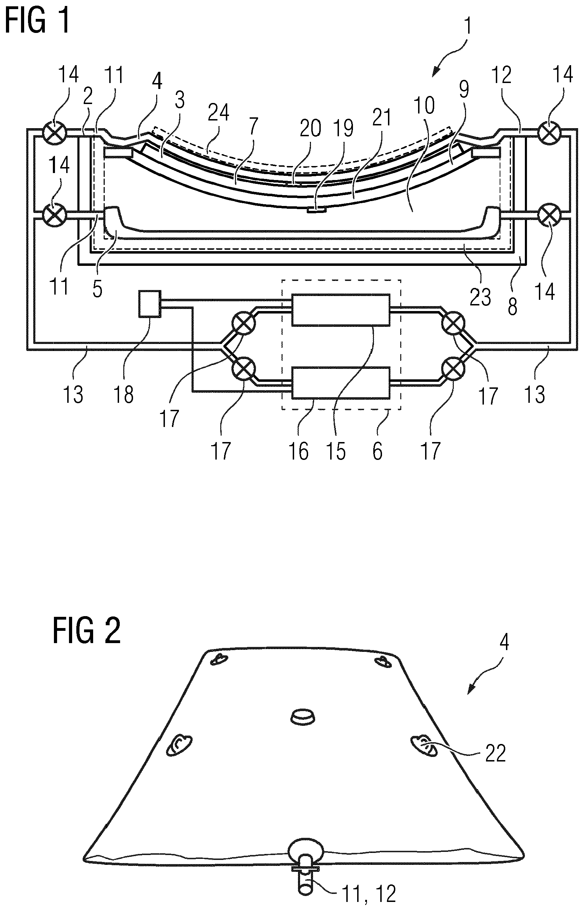

In fig. 1, an embodiment of a mold arrangement 1 is shown. The mold arrangement 1 comprises a mold 2 with a molding surface 3, two bladders 4, 5 and a fluid supply means 6, which is schematically indicated by the dashed line. The fluid supply means 6 is connected to the bladders 4, 5 and is adapted for supplying a fluid to the bladders 4, 5.

On top of the molding surface 3, one or more components 7 are provided with at least one adhesive agent distributed between the components 7. From the components 7, a preform element used for manufacturing a rotor blade of a wind turbine is to be fabricated.

The bladder 4 is arranged on top of the components 7 and the bladder 5 is arranged underneath the mold 2. During the manufacturing of the preform element, a fluid is suppliable to the bladders 4, 5 for heating and/or cooling of the adhesive agent in between the components 7.

The mold 2 comprises a support structure 8 and a plate-like carrier 9, which is supported on the support structure 8. The plate-like carrier 9 provides the molding surface 3, on which the components 7 for manufacturing the preform element are arranged. The support structure 8 is also adapted to support the bladder 4, in particular in a state in which the bladder 4 is filled with the fluid.

The bladder 5 is arranged between the support structure 8 in a cavity 10 below the carrier 9, wherein the bladder 5 may be permanently installed as part of the mold arrangement 1. The support structure 8 may be adapted to constrain the bladder 5 during an expansion of the bladder 5. To avoid for heat losses during heating and/or to avoid unnecessary heat input during cooling, the frame structure 8 of the mold arrangement 1 comprises an insulation 23 insulating the cavity 10 underneath the carrier 9.

Each of the bladders 4, 5 comprises two or more connections 11, 12, which are connected to the fluid supplying means 6. A connection between the connections 11, 12 occurs by one or more connection means 13, which may be provided for instance as hoses and/or tubes for providing the fluid to the interior of the bladders 4, 5. To allow for the control of the flow of the fluid, a plurality of valves 14 is provided between the connections 11, 12 and the fluid supply means 6.

The fluid supply means 6 comprises two fluid tempering means 15, 16, wherein the fluid tempering means 15 is a heating means for providing hot fluid to the bladders 4, 5 and the tempering means 16 is a cooling means for supplying cooled or chilled fluid to the interior of the bladders 4, 5. The fluid tempering means 15, 16 are connected with additional valves 17 to the connection means 13 connecting the fluid supply means 6 to the connections 11, 12 of the bladders 4, 5.

The fluid supply means 6, in particular the fluid tempering means 15, 16 of the fluid supply means 6, are connected to a control unit 18. For instance, the control unit 18 may be a part of the fluid supply means 6 and/or of the fluid tempering means 15, 16 or it may be a separate control unit 18 of the mold arrangement 1. The control unit 18 is connected also to the valves 14 and is adapted to open and/or close the individual valves 14. Furthermore, the control unit 18 may be connected to one or more temperature sensors 19 and/or to one or more pressure sensors 20.

The temperature sensor 19 may be for instance a thermocouple and is arranged at a backside 21 of the mold 2 opposite to the molding surface 3. The pressure sensor 20 may be a pressure transducer and is arranged between the components 7 and the bladder 4 arranged on top of the components 7.

The depicted positions of the temperature sensor 20 and the pressure sensor 19 are just exemplary. It is possible that other positions for the temperature sensor 19 and/or the pressure sensor 20 are used. For instance, one or more temperature sensors 19 may also be arranged between the components 7, and/or inside or at a vacuum bag enclosing the components 7, inside or at one or more of the bladders 4, 5 and/or at other positions of the mold 2, in particular at or in the vicinity of the molding surface 3 and/or at or in the vicinity of the backside 21 of the mold 2.

In fig. 2, an example for a bladder 4, 5 used for the mold arrangement 1 is shown. The bladder 4 is made from a flexible material and can be filled with a liquid, for instance with water. The bladder 4 comprises a plurality of handles 22 on its top side to allow for arranging the bladder 4 on top of the components 7, in particular in a state, in which the bladder 4 is not filled with a liquid. For connecting the bladder 4 to the fluid supplying means 6 as previously described, the bladder 4 comprises a plurality of connections 11, 12, in particular arranged at two opposing sides of the bladder 4 to allow for a fluid flow through the bladder.

The bladder 5 arranged underneath the mold 2 can have a comparable shape and/or comparable composition compared to the bladder 4. It is possible that the bladder 5 comprises no handles 22, since it can remain in the mold arrangement 1 as a removal of the bladder 5 is not required for arranging and/or removing the components 7 prior and/or after to the manufacturing of the preform element.

Referring back to fig. 1, for fabricating a preform element, the plate-like carrier 9 can be arranged on top of the frame structure 8 of the molding arrangement 1. Subsequently, the components 7 can be arranged on the molding surface 3 of the mold 2. The components 7 can be arranged for instance inside a vacuum bag (not depicted), so that a stable arrangement, in particular without air gaps between the components 7, and/or a tight contact between the different components 7 can be achieved.

The components 7 may comprise in particular one or more textile layers comprising or consisting of a fiber-based material. For instance, glass fiber-based components, carbon fiber-based components, aramid fiber-based components or the like can be used. It is possible that as further components 7, rigid components, for instance made of balsa wood and/or a synthetic foam, are used for forming a core section of the preform element to be produced.

Between the components 7, an adhesive agent is distributed. As adhesive agent, for instance a thermoset or thermoplastic polymer can be used. Alternatively, also the usage of other types of adhesive agents is possible. The adhesive agent is activated by heat so that it at least partly flows between and/or into the components 7. After the heating, the adhesive agent can be cooled to solidify and to cause an attachment of the components 7 for forming a preform element.

After arranging the components 7 used for manufacturing the preform element on the molding surface 3, the bladder 4 can be arranged on top of the components 7 and the connections to the valves 14, or the fluid supplying means 6, respectively, are established.

In particular, the arrangement of the bladder 4 occurs in a state, in which the bladder 4 is empty so that it can easily be handled manually. Optionally, the bladder may comprise a heat insulating surface 24, as schematically indicated. The heat insulating surface 24 may be provided integrally with the bladder 4 or as a separate insulating element, for instance as an insulating blanket, arranged of the bladder 4.

After connection of the bladders 4, 5 to the fluid supply means 6, the bladders 4 and 5 are filled with a fluid. For instance, the fluid may be a liquid like water. However, it is also possible to use other type of fluids, for instance a gas or another liquid like glycerol, glycol, an oil or the like. Another fluid than water may be used for instance when the adhesive agent shall be heated to temperatures above 100°C, or cooled to temperatures below 0°C, respectively.

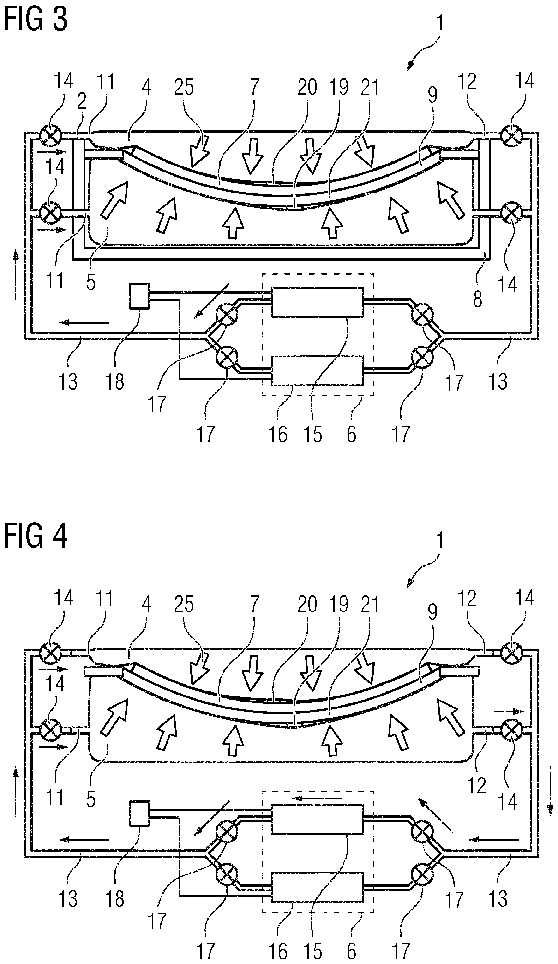

As it is depicted in fig. 3, as a first step, a heated fluid is filled into the bladders 4, 5. The heated fluid is provided by the tempering means 15, which is a heating unit adapted for heating the fluid supplied to the bladders 4, 5. The fluid is supplied for instance by opening the corresponding valves, 14, 17 connected to the connections 11 used as inlets to allow for a supply of the fluid to the connections 11 of the bladders 4, 5, which therefore serve as an inlet of the bladders 4, 5.

The bladders 4, 5, which are fabricated from a flexible and/or inflatable material, are expanded by the supplied fluid, so that they may grow in size. Advantageously, as indicated by the arrows 25, an in particular evenly distributed pressure onto the components 7 can be created. This allows for avoiding or at least reducing air gaps between the bladders 4, 5 and the components 7, or the carrier 9, respectively, so that a good and evenly distributed heat transfer from the bladders 4, 5 to the components 7, or the carrier 9, respectively, can be obtained.

In particular, the bladder 4 can be filled in dependence on a pressure measured by the pressure sensor 20. Therefore, the control unit 18 can control the valves 14, 17 as well as the fluid supply means 6 and the tempering units 15, 16 in dependence of a pressure measured by the pressure sensor 20. The lower bladder 5 is in particular filled with a liquid until the bladder is expanded in such manner by the supplied fluid that it is in direct contact with the backside 21 of the mold 2.

Afterwards, as it is shown in fig. 4, the valves 14 connected to the further connections 12 used as outlets are opened so that a fluid circulation through the bladders 4, 5 occurs. By continuously providing the fluid heated by the tempering means 15, a constant temperature in the interior of the bladders 4, 5 can be obtained. Therefore, the control unit 18 can control the tempering means 15 to provide the fluid with a temperature determined in dependence of a temperature measured by the at least one temperature sensor 19. During the heating, the amount of fluid supplied to the bladder 4 and/or the bladder 5 can be controlled also in dependence on a measured pressure at or in the components measured by the at least one pressure sensor 20. This allows for maintaining a constant pressure onto the components 7.

After heating the adhesive agent between the components 7 for a duration of the heating period, the supply of the heated fluid to the bladders 5 can be shut off. The heated fluid is then drained from the bladders 4, 5, for example by the fluid supplying means 6, by discharging the fluid to the surroundings or by connecting the bladders 4, 5 to a storage tank.

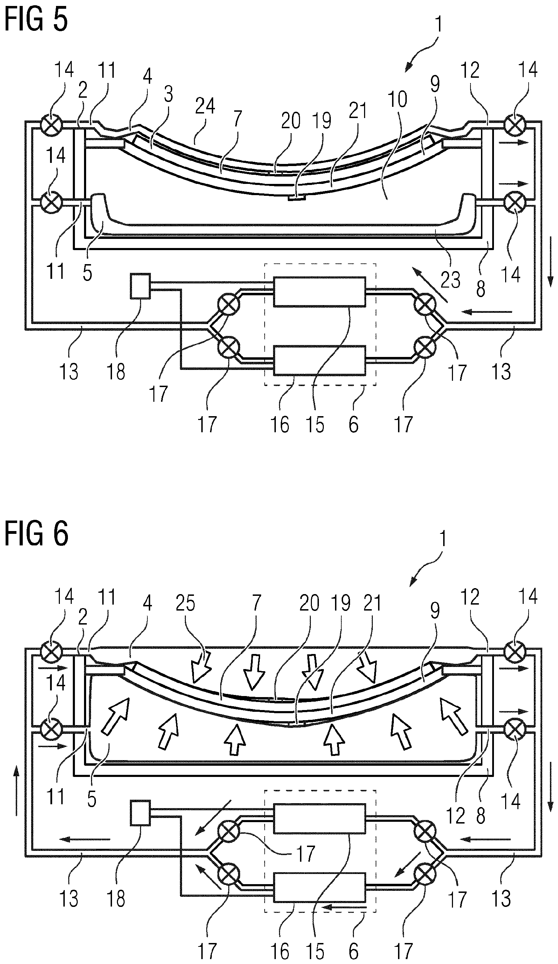

In fig. 5, the removal of the fluid from the bladders 4, 5 by the fluid supply means 6 is shown. After removal of the fluid, the upper bladder 4 may be removed so that the adhesive agent may cool via natural convection. Alternatively, the top bladder 4 can be left in place to allow for an active cooling of the components 7.

As it is shown in fig. 6, the bladders 4, 5 may be filled with a cooled fluid, provided by the tempering means 16. Again, the bladders 4, 5 are filled with the cooled fluid to a volume at which sufficient contact between the bladder 4 and the top surface of the components 7 and between the bladder 5 and the back side 21 of the mold 2 is obtained. The fluid is then continuously circulated, wherein again a temperature control in dependence on a temperature measured by the temperature sensor 19 and/or a pressure control in dependence of a pressure measured by the pressure sensor 20 can occur by respectively controlling the fluid supply means 6 through the control unit 18.

It is possible that a fluid reservoir (not shown) is integrated into the fluid flow circle. This can be used in particular when a fluid other than water is used, so that the fluid does not have to be discharged from the mold arrangement 1 and can be re-used in further production cycles.

Once the adhesive agent has been cooled sufficiently, the components 7 are connected to each other forming a preform element 26. After actively cooling the adhesive agent for the duration of a corresponding cooling period, the fluid can be removed from the bladders 4, 5, as previously described. Afterwards, the bladder 4 arranged on the components 7, or on the manufactured preform element 26, respectively, can be removed. The preform element 26 can then be removed from the molding surface 3 or transported within a production facility on the carrier 9.

The preform element 26 fabricated as previously described can be used in an embodiment of a method for manufacturing a rotor blade for a wind turbine. In particular, the fabrication of the rotor blade occurs using a resin transfer process, for example resin transfer molding and/or vacuum assisted resin infusion. It is possible that after its manufacturing, the preform element 26 is directly transported to a mold for manufacturing the rotor blade or that it is stored for future use.

It is possible that during the manufacture of the preform element 26, multiple bladders 4 arranged on top of the components 7 and/or multiple bladders 5 arranged underneath the mold are used. This allows for applying different temperatures and/or different heating durations and/or cooling durations to different sections of the components 7, or the preform element 26 to be manufactured, respectively.

The multiple bladders 4, 5 can be arranged in the longitudinal direction of the mold 2, hence in the in-plane direction of the figures 1 and 3 to 6. Also an arrangement of multiple bladders in the circumferential direction of the concave molding surface 3, hence from left to right in the figures, is possible.

The usage of multiple bladders 4, 5 can account for different heat transfer requirements of different sections of the stack of components 7. For instance, some parts of the stack of components 7, or of the preform element 26 to be manufactured, respectively, can have different thicknesses and therefore require a different heat input to obtain the desired behaviour of the adhesive agent. The multiple bladders 4, 5 may be provided as separate bladders 4, 5 or as inner cavities of a multiple bladder element.

In particular, each of the bladders is connected individually to a fluid supply means 6 as previously described, so that an individual providing of heated and/or cooled fluid to the individual bladders becomes possible. Also a connection of pairs of bladders 4, 5 or larger groups of bladders 4, 5 to separate fluid supply means 6 is possible.

Although the present invention has been described in detail with reference to the preferred embodiment, the present invention is not limited by the disclosed examples from which the skilled person is able to derive other variations without departing from the scope of the invention.

## Claims

1. Method for manufacturing a preform element (26) used in particular for manufacturing a rotor blade of a wind turbine, wherein the preform element (26) comprises one or more components (7) provided with at least one adhesive agent, wherein the components (7) are arranged on a molding surface (3) of a mold (2), wherein at least one bladder (4, 5) is arranged on top of the components (7) and/or underneath the mold (2) and wherein at least one fluid is supplied to the bladder (4, 5) for heating or cooling of the adhesive agent.

2. Method according to claim 1, **characterized in that** first a heated fluid is filled into the bladder (4, 5), wherein after a heating period, the heated fluid is exchanged by a fluid with temperature lower than the temperature of the heated fluid, or the heated fluid is removed from the bladder (4, 5) and/or the bladder (4, 5) is removed from the components (7).

3. Method according to claim 1 or 2, **characterized in that** the bladder (4, 5) comprises at least two connections (11, 12), wherein the fluid is continuously added and discharged from the bladder (4, 5) through the connections (11, 12) during heating or cooling of the adhesive agent.

4. Method according to one of the preceding claims, **characterized in that** at least one bladder (4, 5) arranged underneath the mold (2) is used, wherein the bladder (4, 5) is expanded by the supplied fluid in such manner that it is at least sectionally in direct contact with a backside (21) of the mold (2) opposite to the molding surface (3).

5. Method according to one of the preceding claims, **characterized in that** a liquid is supplied to the bladder (4, 5), in particular water or a liquid hydrocarbon.

6. Method according to one of the preceding claims, **characterized in that** the temperature of a fluid supplied to the bladder is set by a tempering means (15, 16) in dependence of a measured temperature of the components (7), the adhesive agent, the bladder (4, 5) and/or the mold (2) measured by at least one temperature sensor (19).

7. Method according to one of the preceding claims, **characterized in that** the amount of the fluid supplied to the bladder by a fluid supplying means (6) and/or that the amount of the fluid kept in the bladder (4, 5) during the heating and/or cooling of the adhesive agent is set in dependence of a measured pressure at or in the components (7) measured by at least one pressure sensor (20).

8. Method according to one of the preceding claims, **characterized in that** a plurality of bladders (4, 5) is arranged on top of the components (7) and/or underneath the mold (2), wherein at least two of the bladders (4, 5) are filled with a fluid at a different temperature.

9. Method according to one of the preceding claims, **characterized in that** a bladder (4, 5) comprising at least one heat insulating surface (24) is used, wherein the bladder (4, 5) is arranged in such manner that the heat insulating surface (24) is arranged opposite to the components (7) and the mold (2) .

10. Method according to one of the preceding claims, **characterized in that** the components (7) are arranged on the molding surface (3) within a vacuum bag.

11. Method for manufacturing a rotor blade using at least one preform element (26) manufactured according to one of the preceding claims.

12. Mold arrangement for manufacturing a preform element comprising a mold (2) with a molding surface (3), at least one bladder (4, 5) and a fluid supply means (6) connected or connectable to the bladder (4, 5) for supplying a fluid to the bladder (4, 5).

13. Mold arrangement according to claim 12, **characterized in that** the mold (2) comprises a support structure (8) and a plate-like carrier (9), wherein the plate-like carrier (9) is supported on the support structure (8) and provides the molding surface (3), wherein at least one bladder (4, 5) is arranged inside the support structure (8) in a cavity (10) underneath the carrier (9).

14. Mold arrangement according to claim 12 or 13, **characterized in that** the fluid supply means (6) and/or the bladder (4, 5) are connected to at least one fluid tempering means (15, 16) adapted for heating and/or cooling of the fluid.

15. Mold arrangement according to claim 14, **characterized in that** the mold arrangement (1) comprises one or more temperature sensors (19), wherein the fluid tempering means (15, 16) is adapted to heat and/or cool the fluid in dependence of at least one temperature measured by the temperature sensors (19), and/or that the mold arrangement (1) comprises one or more pressure sensors (20), wherein the fluid supply means is adapted to supply an amount of the fluid to the bladder (4, 5) and/or to keep an amount of the fluid in the bladder (4, 5) during the heating and or cooling of the adhesive agent in dependence of a pressure measured by at least one pressure sensor (20) arranged at the components (7).
